# FASCICULE DE BREVET EUROPEEN

(11) **EP 2 254 830 B1**
(45) Date de publication et mention de la délivrance du brevet: **11.04.2018**
(21) Numéro de dépôt: 09713294.8
(22) Date de dépôt: 17.02.2009
(51) Int. Cl.: B82Y 30/00, B82Y 40/00, C01B 32/166, C01B 32/05, C01B 32/162

(54) **CROISSANCE DE NANOTUBES DE CARBONE SUR SUBSTRATS DE CARBONE OU METALLIQUES**
WACHSTUM VON KOHLENSTOFFNANORÖHREN AUF KOHLENSTOFF- ODER METALLSUBSTRATEN
GROWTH OF CARBON NANOTUBES ON CARBON OR METAL SUBSTRATES

(30) Priorité: 20.02.2008 FR 0851094
(43) Date de publication de la demande: 01.12.2010
(73) Titulaire: Commissariat à l'Énergie Atomique et aux Énergies Alternatives, 75015 Paris (FR)
(72) Inventeur: PINAULT, Mathieu, F-92160 Antony (FR); DELMAS, Mathieu, F-31120 Portet Sur Garonne (FR); MAYNE L'HERMITE, Martine, F-91470 Les Molieres (FR)
(74) Mandataire: Cabinet Plasseraud
(86) Numéro de dépôt international: PCT/FR2009/050247
(87) Numéro de publication internationale: WO 2009/103925

(56) Documents cités:
- WO-A-02/29131
- WO-A-2004/000727
- WO-A-2004/048257
- WO-A-2007/136613
- US-A1- 2006 026 996
- TAGAKI D ET AL: "Carbon Nanotube Growth from Semiconductor Nanoparticles" NANO LETTERS,, vol. 7, no. 8, 19 juillet 2007 (2007-07-19), pages 2272-2275, XP002497374
- DATABASE WPI Week 20058 Thomson Scientific, London, GB; AN 2005-068671 XP002499930 & JP 2005 001942 A (MITSUBISHI GAS CHEM CO INC) 6 janvier 2005 (2005-01-06)
- DATABASE WPI Week 200413 Thomson Scientific, London, GB; AN 2004-130874 XP002499931 & JP 2004 002182 A (MITSUBISHI GAS CHEM CO INC) 8 janvier 2004 (2004-01-08)
- C.J. LEE, J. PARK, S.Y.KANG, J.H. LEE: "Growth of well-aligned carbon nanotubes on a large area of Co-Ni co-deposited silicon oxide substrate by thermal chemical vapor deposition" CHEMICAL PHYSICS LETTERS, vol. 323, 23 juin 2000 (2000-06-23), pages 554-559, XP002499929
- FUJII T ET AL: "Production of aligned carbon nanotube film used in, e.g. electron emitters, by preparing sol-gel method porous carrier having fine pores, and decomposing carbon compound with catalyst loaded on the carrier", WPI/THOMSON,, vol. 2004, no. 13, 1 October 2003 (2003-10-01), XP002499931, & JP 2004 002182 A (MITSUBISHI GAS CHEMICAL CO) 8 January 2004 (2004-01-08)

## Description

### DOMAINE TECHNIQUE

L'invention concerne l'élaboration de matériaux composites à base de nanotubes de carbone.

En particulier, elle concerne la croissance de nanotubes de carbone par dépôt chimique en phase vapeur (CVD pour "Chemical Vapour Déposition") sur substrats carbonés ou métalliques.

### ÉTAT DE LA TECHNIQUE ANTÉRIEURE

Les nanotubes de carbone présentent des propriétés mécaniques, électriques et thermiques avantageuses à l'échelle nanoscopique. En raison de leur structure unique, de leurs dimensions et de leur facteur de forme (rapport longueur/diamètre élevé), les nanotubes s'avèrent très prometteurs en termes d'applications. Ils sont notamment pressentis pour remplacer les pistes conductrices dans les circuits intégrés grâce à leur faible tendance à l'automigration, de forts courants maximaux, et autres propriétés. Par ailleurs, des études montrent que ces nanostructures développent une très forte résistance à la traction et que leur comportement électrique peut varier de semi-conducteur à métallique en fonction de leur structure, cette conductivité électrique s'accompagnant d'une excellente conductivité thermique. Leur incorporation dans les matériaux composites en particulier a ainsi été envisagée rapidement.

Les propriétés des matériaux composites fabriqués à l'heure actuelle semblent d'ores et déjà satisfaisantes pour de nombreuses applications. Toutefois, une amélioration des conductivités thermiques et électriques, ainsi que des performances mécaniques permettrait d'élargir leur domaine d'application, notamment pour des fuselages d'avions, des disques de freinage, et autres.

Dans le contexte actuel, favorable au développement des matériaux composites à base de fibres de carbone, une solution qui permettrait d'obtenir, à l'échelle macroscopique, les propriétés des nanotubes de carbone apparaissant à l'échelle nanoscopique, constituerait un progrès certain. Cependant, les performances mécaniques et thermiques obtenues en employant des nanotubes de carbone en tant que charge classique de composites s'avèrent discutables, alors que les propriétés de conductivité électrique obtenues dans les composites chargés en nanotubes de carbone s'avèrent satisfaisantes. Afin d'améliorer l'efficacité de l'incorporation des nanotubes de carbone dans les matériaux composites et, *in fine*, améliorer les propriétés du matériau résultant, plusieurs pistes ont été envisagées, dont deux principales décrites ci-après. Il est possible en effet :
- d'aligner les nanotubes de carbone au sein d'une matrice du composite (par exemple de polymère) ;
- d'intégrer les nanotubes de carbone sur un renfort existant du composite (un renfort par exemple tel que des fibres de verre, d'alumine, de carbone, ou autre).

Les nanotubes de carbone peuvent donc être incorporés au système de matrice ou de renforts de façon ordonnée ou désordonnée et doivent idéalement présenter une cohésion avec les fibres du renfort.

Ainsi, la croissance directe des nanotubes sur fibres de carbone a été envisagée. Les nanotubes de carbone obtenus sur les fibres peuvent être enchevêtrés.

Une autre voie serait de les produire pour être perpendiculaires à l'axe de la fibre, comme ils le sont déjà sur des substrats plans (de silicium, de quartz, ou autre) dans le cas de certains procédés de croissance. Cette dernière configuration avec des nanotubes de carbone orientés perpendiculairement par rapport à l'axe des fibres devrait en particulier conduire à une augmentation de la surface de contact entre le renfort que forme le tissage des fibres et la matrice de polymère qui l'entoure et favoriser ainsi les transferts de propriétés thermomécaniques, ce qui devrait augmenter potentiellement les propriétés de conductivité thermique du composite. Un procédé pouvant conduire à ce type de matériau permettant ce transfert de propriétés à l'échelle macroscopique, pouvant être appliqué à l'échelle industrielle, en continu ou en semi-continu, présenterait un intérêt indéniable.

La croissance des nanotubes de carbone sur substrats carbonés de tout type (surface plane, fibres, mousses, particules) est connue pour être problématique. Les résultats obtenus à ce jour montrent des croissances de nanotubes de carbone courts et enchevêtrés sur les surfaces carbonées, d'une densité très faible, et en aucune façon comparable aux tapis denses et alignés obtenus sur les substrats type quartz ou silicium. Certaines études évoquent même l'absence de croissance. Ces problèmes de croissance se rencontrent aussi sur d'autres types de substrats que les substrats carbonés, notamment sur les métaux (acier inoxydable, de palladium, d'or, etc.).

La croissance sur des substrats carbonés, comme des fibres de carbone, est généralement effectuée par dépôt chimique en phase vapeur (CVD).

Les techniques de croissance CVD employées reposent sur la décomposition d'un gaz carboné par des particules de métal (dites "particules catalytiques") dans un four. On peut distinguer deux types principaux de procédés:
- le procédé par pré-imprégnation, où les particules sont créées avant la croissance proprement dite des nanotubes de carbone, et qui est mis en oeuvre par trempage dans des solutions de sels métalliques appropriées, suivi d'une injection de gaz carbonés pour la croissance des nanotubes de carbone,
- le procédé par injection et vaporisation dans le four d'une solution d'un composé organométallique dans un solvant organique source de carbone.

Certaines études proposent l'application de traitements de surface aux fibres afin de favoriser la croissance de nanotubes de carbone à leur surface. Certains de ces procédés ont apporté une amélioration à la croissance des tubes (en termes de densité, de longueur, ou autres), mais les résultats restent très en-dessous des résultats obtenus sur des substrats autres qu'en carbone ou métalliques.

Une étude de W.Z. Li et al, publiée dans Chem. Phys. Lett., vol. 335, pages 141-149 (2001), a été réalisée sur un substrat plan, de graphite, recouvert par pulvérisation cathodique (ou "sputtering") d'un film d'acier inox (Fe:Cr:Ni = 70:19:11), qui, après recuit, mène à la formation de particules d'acier inox dont la taille varie avec l'épaisseur du film déposé à la surface du film de graphite. La croissance des nanotubes de carbone a été menée à partir d'acétylène dilué dans l'azote durant une heure et à une température de 660°C. Pour une taille de particules de 40 nm, les clichés par microscopie électronique à balayage (MEB) montrent une croissance de nanotubes de carbone peu denses, et des nanotubes enchevêtrés horizontalement à la surface du substrat. Les nanotubes semblent ne prendre naissance que sur les particules présentant une forme sphérique, et non pas sur les particules ayant coalescé et présentant des formes aléatoires.

Enfin, il semble que les résultats des alliages Fe/Ni sur graphite soient plus encourageants que ceux de Fe ou Ni seuls, car dans les mêmes conditions, la croissance des nanotubes de carbone prend place sur les particules d'alliage et non pas sur les particules de métaux purs.

Parmi les études menées à ce jour sur la croissance de nanotubes de carbone sur des fibres de carbone (de quelque type que ce soit), peu de travaux probants utilisant la technique CVD sont recensés. La plupart des protocoles consistent en l'imprégnation des fibres avant le dépôt CVD, par voie humide, et réduction.

L'imprégnation est réalisée par trempage des fibres dans une solution (aqueuse ou organique) de sels de métaux de transition (fer, nickel, cobalt, ou un mélange de ceux-ci), les fibres sont alors chauffées sous atmosphère réductrice pour permettre la formation des particules catalytiques. Par la suite, la croissance des nanotubes de carbone est réalisée par chauffage dans un four où un courant de gaz carboné est amené. La morphologie obtenue présente une gaine mince (quelques micromètres) que forment les nanotubes de carbone autour de la fibre de carbone. Les nanotubes de carbone sont peu denses et enchevêtrés en entourant les fibres de carbone, et plus ou moins de particules de carbone (sous-produit de la réaction de synthèse) se trouvent agglomérées autour.

Les travaux réalisés hors de l'imprégnation ne sont pas concluants. On peut notamment citer à ce titre le brevet FR-2 841 233 qui montre une croissance de nanotubes sur fibres de carbone de manière peu dense, de longueurs courtes et sans orientation, alors que dans les mêmes conditions de croissance, des tapis de nanotubes de carbone denses et alignés sont obtenus sur des substrats de quartz ou de silicium. Les traitements évoqués dans la littérature pour les fibres de carbone sont le plus souvent des traitements d'oxydation et consistent principalement en des traitements chimiques (acides, peroxyde d'hydrogène), et plasma (corona ou autre) avec des atmosphères variables. D'autres types de traitements sont évoqués dans de nombreuses publications, qu'il s'agisse de fonctionnaliser la surface des fibres pour en améliorer l'interface fibre-matrice, ou favoriser l'ancrage de nanotubes ou de fonctions chimiques en surface. Les techniques évoquées, là aussi, sont généralement de nature chimique, physico-chimique (combinant plasma et dépôt chimique, par exemple de silsequioxane), ou encore d'irradiation gamma.

Le plus commun des traitements de surface par dépôt de sous-couches pour ce système consiste en un trempage dans une solution d'organosiliciés et de sels métalliques précurseurs des particules catalytiques. Le tout est alors hydrolysé par ajout d'acide dans le bain. Un film grossier, incluant les sels métalliques précurseurs principalement composés de silice (SiO₂), est alors formé à la surface des fibres. Une fois séchées, les fibres ainsi recouvertes sont portées à haute température (800°C typiquement) sous atmosphère réductrice (gaz inerte additionné de quelques pourcents d'hydrogène) afin de réduire les sels métalliques en particules catalytiques. Le film de SiO₂ ainsi créé sert à la fois de barrière de diffusion pour la croissance ultérieure des nanotubes de carbone et de sites d'ancrage pour les particules de catalyseur (techniques dites de pré-imprégnation), comme décrit dans le brevet FR-2 844 510. En général, un composé de type tétraéthylorthosilicate (TEOS), ou 2(4-chlorosulfophényl) éthyltrichlorosilane est utilisé. Certaines études ont même pu mettre en évidence un excellent ancrage des nanotubes par cette méthode. L'état de surface de fibres après traitement à base d'organosiliciés reste cependant grossier et présente une épaisseur micrométrique avec déjà des fissures. Il est peu adhérent, en outre, mais les nanotubes de carbone obtenus forment une couche continue de tubes enchevêtrés de quelques micromètres de longueur maximale.

Dans la demande de brevet US-11/523,731 un dépôt micrométrique de carbure de silicium (SiC) est appliqué aux fibres avant la croissance des nanotubes de carbone. Il s'agit là de recouvrir les fibres d'un précurseur de polymère par la suite polymérisé à 200°C, puis pyrolysé à 1000°C durant une heure. Le procédé permet la formation d'une pellicule de SiC de quelques micromètres d'épaisseur. La croissance des nanotubes de carbone intervenant dans une seconde étape sur ces revêtements. La croissance observée est dense et radiale. Cependant, l'épaisseur de ces couches de SiC peut devenir problématique au niveau de la mécanique du composite formé ainsi.

La faisabilité de la croissance des nanotubes de carbone sur fibres de carbone par dépôt CVD d'aérosol, avec emploi d'une solution de précurseur organométallique (de type métallocène, par exemple) dans un hydrocarbure est exposée dans le document correspondant à la publication de la demande PCT/FR05/00201. Divers traitements de surface sont suggérés et notamment l'application de couches nanométriques de SiO₂, SiO, SiC. Seul le mode d'application de SiO est décrit en détail, mettant en jeu une phase d'évaporation de SiO commercial à 1100°C. Cependant, la croissance des nanotubes de carbone lors de la seconde étape de ces procédés reste sporadique, et lente. Les résultats illustrés restent très en-dessous des densités obtenues sur substrats oxyde (fibres Al₂O₃, par exemple). L'orientation générale des nanotubes est verticale, mais en aucun cas alignée ni perpendiculaire à l'axe de la fibre.

Le document XP 002497374 « Carbon nanotube growth from semiconductor nanoparticles » de Daisuke Takagi *et al.* décrit un procédé de croissance de nanotubes de carbone sur des substrats comprenant des nanoparticules de céramique.

Ainsi, d'une façon générale, il se dégage de l'ensemble des travaux évoqués les points suivants :
- la croissance des nanotubes de carbone sur substrats carbonés est difficile ;
- la densité des nanotubes de carbone obtenue est généralement faible, voire très faible, sans que l'on puisse l'améliorer notablement par des moyens simples (paramètres de synthèse, par exemple) ;
- la longueur des nanotubes de carbone obtenus est souvent faible et d'un contrôle difficile, avec des vitesses de croissance faibles ;
- la morphologie des nanotubes présente de nombreux défauts (courbures notamment) ;
- l'arrangement des nanotubes de carbone est aléatoire ou peut présenter une tendance à l'orientation, sans pour autant obtenir de croissance de nanotubes de carbone réellement alignés.

Les études actuelles montrent que la croissance des nanotubes de carbone est difficile sur les fibres lorsque celles-ci ne sont pas traitées auparavant. L'utilisation d'un pré-traitement de surface, constituant une étape préalable et distincte de la croissance des nanotubes de carbone, notamment en ce qu'elle met en oeuvre une méthode de traitement clairement différente de la méthode de dépôt, ne mène que difficilement à une amélioration notable de la croissance.

Les études, malgré les adaptations de procédés ou les prétraitements employés, mettent en évidence une incapacité à égaler en termes de densité,
d'alignement et de longueur, les croissances de nanotubes de carbone obtenues sur les substrats tels que le quartz, par exemple.

La présente invention vient améliorer la situation. Elle permet de faire croître des nanotubes de carbone :
- sur des fibres de carbone,
- sur des substrats de carbone ou
- sur des substrats métalliques,
de façon dense et alignée, c'est-à-dire de façon comparable aux croissances sur substrats autres que carbone ou métaux.
Elle permet en particulier l'obtention de nanotubes de carbone propres, denses et alignés sur des fibres de carbone, et plus généralement sur tout substrat carboné ou métallique où la croissance des nanotubes de carbone s'était avérée difficile ou inexistante dans l'art antérieur.

### EXPOSÉ DE L'INVENTION

L'invention propose à cet effet un procédé de croissance de nanotubes de carbone sur un substrat choisi parmi des fibres de carbone, un substrat de carbone et un substrat métallique, dans lequel on prévoit, successivement, dans un même réacteur de croissance, en une seule étape résultant de l'enchaînement des deux phases successives suivantes :
- une première phase de dépôt d'une sous-couche de céramique, la céramique étant choisie parmi SiO₂, Al₂O₃, ZrO₂, TiO₂, SiC, SiCN, SiON et SiOCN,
- suivie d'une deuxième phase de dépôt de nanotubes de carbone, sur ladite sous-couche,la première phase et la deuxième phase étant réalisées sans exposition à l'atmosphère extérieure. Le procédé au sens de l'invention comporte une seule étape résultant de l'enchainement des deux phases successives suivantes :
   - une première phase, de formation sur un substrat de la sous-couche céramique,
   par exemple par introduction dans le réacteur, puis pyrolyse, d'un premier liquide pulvérisé contenant un précurseur de céramique, et
   - une seconde phase, de croissance sur cette sous-couche de nanotubes de carbone, par introduction dans le même réacteur, puis pyrolyse, d'un deuxième liquide pulvérisé contenant un précurseur carboné de nanotubes de carbone, ainsi, avantageusement, qu'un précurseur métallique, catalyseur de la croissance des nanotubes de carbone.

L'invention s'applique à un grand nombre de substrats et particulièrement aux substrats carbonés ou métalliques.

Le substrat correspond généralement à la surface d'un corps recevant un dépôt. Le corps lui-même peut avoir une composition (hors de la surface) qui peut être variable et diverse, ou simplement semblable, à celle de la surface recevant le dépôt.

Par substrat « carboné », il faut comprendre un substrat constitué essentiellement d'un squelette carboné. Il peut, par exemple, s'agir d'une forme allotropique du carbone comme le graphite, par exemple le graphène, le diamant, le carbone sous forme amorphe, les fullerènes, comme les nanotubes de carbone, les nanocolonnes, les nano-cornets, la mousse de carbone, le carbone sous forme vitreuse, ou encore les fibres de carbone. Parmi les substrats carbonés, les fibres de carbone sont préférées dans une mise en oeuvre de l'invention.

Par substrat « métallique », on entend, dans le cadre de l'invention, un substrat constitué d'un métal, notamment le palladium (Pd), le platine (Pt), l'or (Au), le chrome (Cr) et le manganèse (Mn), ou d'un alliage métallique, comme l'acier inoxydable, ou Fe-Ni. Parmi les substrats métalliques, l'acier inoxydable est préféré dans une mise en oeuvre de l'invention, par exemple la composition de la nuance 316L.

Le procédé est généralement réalisé dans un réacteur de dépôt en phase vapeur (CVD). Il s'agit typiquement d'une enceinte fermée et résistante à une haute température et à une pression réduite. L'intérieur de celle-ci est généralement revêtu de quartz ou d'acier inoxydable.

La pyrolyse permet la décomposition chimique des précurseurs contenus dans le premier liquide (noté A ci-après) pour former la sous-couche de céramique et le deuxième liquide (noté B) pour former les nanotubes de carbone. Elle est réalisée à une température suffisante pour assurer la décomposition des précurseurs. Typiquement, elle est effectuée à une température comprise entre 200 et 1100°C à une pression comprise entre 20 mbar et 1000 mbar.

Au sens de l'invention, un « précurseur de céramique » correspond à un composé dont la décomposition par pyrolyse conduit à la formation d'une céramique. Parmi les céramiques, on distingue les céramiques oxydes, telles que SiO₂, Al₂O₃, ZrO₂ et TiO₂, et les non oxydes, comme SiC, SiCN, SiON ou SiOCN.

A titre de précurseur de céramique, on peut notamment citer Si(OEt)₄ (TEOS), (iPrO)₃Al, (BuO)₄Zr, (BuO)₄Sn, HMDS (pour hexaméthyledisylazane), 4-DMAS (tetrakisdimethylaminosilane), ou autre.

Le liquide A comprend généralement un solvant dans lequel le précurseur de céramique est dissout ou placé en suspension. Il s'agit généralement d'un solvant de nature organique qui est liquide à température et pression ambiante, comme un hydrocarbure, par exemple le benzène et ses dérivés, tels que le toluène et le xylène, ou bien des alcanes comme le cyclohexane, l'hexane où l'heptane. De préférence, le solvant est choisi pour qu'il ne réagisse pas de manière significative avec le précurseur de céramique. Les précurseurs sont disponibles commercialement et il est avantageux d'employer, éventuellement à titre de solvant dans le cadre de l'invention, les solvants dans lesquels les précurseurs sont stockés habituellement pour commercialisation.

Concernant les précurseurs de nanotubes de carbone, il s'agit généralement d'un mélange d'une source carbonée et d'une source d'un catalyseur métallique. A titre de source carbonée, il est notamment possible d'employer un hydrocarbure, généralement sous forme liquide à température et pression ambiante, comme par exemple le benzène et ses dérivés, tels que le toluène et le xylène, ou bien des alcanes comme le cyclohexane, l'hexane où l'heptane. Il est, en outre, important de noter que ce liquide d'hydrocarbure peut contenir un seul hydrocarbure ou un mélange de plusieurs hydrocarbures, en proportions choisies. Généralement, la source carbonée joue aussi le rôle de solvant pour le liquide B.

Le catalyseur comprend préférentiellement un métal, comme par exemple un métal de transition (Fe, Co, Ti ou Ni), ou un métal noble (Pd, Ru, Pt). Le métal peut être sous la forme de nanoparticules ou sous la forme d'un composé organométallique. Lorsque le catalyseur est sous la forme de nanoparticules, il est généralement en suspension colloïdale dans la source carbonée. A titre de catalyseur organométallique, on peut notamment citer les métallocènes, comme les ferrocènes, les nickelocènes, les cobaltocènes et les ruthénocènes, ou encore les phtalocyanines, particulièrement de fer ou de nickel. Le catalyseur peut aussi être choisi, par exemple, parmi les sels de métaux, tels que les nitrates, les acétates, les acétylacétonates. Il est bien entendu que la solution peut être constituée soit d'un composé solide organométallique, soit d'un mélange de composés solides, dissous dans l'hydrocarbure liquide ou dans un mélange d'hydrocarbures liquides, étant entendu toutefois qu'il est préférable que la solubilité du produit solide dans le liquide soit assurée.

Le liquide B peut en outre comprendre un ou plusieurs composés pour favoriser la croissance des nanotubes de carbone comme le thiophène ou des précurseurs de terres rares (Y, La, Ce ou autre).

Les composants du liquide B peuvent être sélectionnés pour comprendre des hétéroatomes, comme N (azote), P (phosphore) ou B (bore), afin de doper les nanotubes de carbone. Il est également possible d'ajouter un composé au liquide B comprenant un ou plusieurs hétéroatomes. Généralement, les hétéroatomes peuvent être présents dans le solvant qui aura été convenablement sélectionné. Ainsi, pour obtenir des nanotubes de carbone dopés à l'azote, il est possible d'employer la benzylamine ou l'acétonitrile, la diphénylphosphine peut être utilisée pour le dopage au phosphore et les boranes, borazines pour le dopage au bore.

On peut prévoir éventuellement aussi un dopage de la sous-couche de céramique en formation pour la rendre conductrice selon certaines applications.

On entend aussi par le terme "pulvérisation", le fait de former des particules liquides finement divisées, telles que des gouttelettes. Les particules liquides finement divisées, telles que des gouttelettes, ont une dimension de quelques dixièmes de microns à quelques centaines de microns, de préférence de 0,1 à 300 microns.

La pulvérisation des liquides A et B peut être par exemple réalisée à l'aide d'un injecteur pouvant fonctionner par impulsions, avec un nombre d'impulsions pouvant aller généralement de 0,9 à 1200 par minute et à chaque impulsion est injecté un volume de liquide dont la gamme varie à la fois en fonction de la durée d'ouverture d'une vanne aiguille (généralement de 0,5 à 12 ms) et du liquide utilisé.

Eventuellement, les particules finement divisées, telles que les gouttelettes formées par un tel système d'injection sont, préalablement à leur introduction dans l'enceinte de réaction, évaporées dans un dispositif d'évaporation. Il peut en effet être avantageux de vaporiser les liquides pulvérisés avant leur introduction dans le réacteur. Il est possible à cet effet d'introduire tout d'abord les liquides pulvérisés dans un évaporateur. L'évaporateur peut être par exemple constitué d'un dispositif de chauffage et/ou d'un dispositif de décompression.

Les liquides pulvérisés ou pulvérisés par la suite sont avantageusement introduits dans le réacteur à l'aide d'un gaz vecteur. On peut ainsi distinguer un aérosol A, constitué du liquide A et d'un gaz vecteur, d'un aérosol B, constitué du liquide B et d'un gaz vecteur, afin de contrôler indépendamment leur pression et leur débit.

A titre de gaz vecteur, il est possible d'employer un ou plusieurs composés existant sous forme gazeuse à température et pression ambiante. Il peut s'agir de tout type de gaz et notamment un gaz inerte Ar (argon), He (hélium), N₂ (azote), ou encore H₂ (hydrogène), ou d'un mélange de ceux-ci. Dans une réalisation, il s'agira typiquement d'argon ou un mélange d'argon et d'hydrogène. L'utilisation d'un gaz vecteur comprenant des hétéroatomes, tel par exemple que de l'azote N et/ou des dérivés (NH₃, N₂H₄, ...), à l'une ou l'autre des phases peut être mise à profit pour doper la céramique ou les nanotubes de carbone.

L'introduction des liquides pulvérisés peut-être faite de manière continue ou discontinue. Il est recommandé que l'introduction ait lieu de manière discontinue : on parle alors d'injection en mode pulsé. Chacune des pulsations, ou « pulse », correspondant à l'introduction d'une quantité donnée de liquide ou d'aérosol dans le système. La fréquence des pulses est typiquement comprise entre 2 et 50 Hz, pour avoir un type de revêtement souhaité dans de bonnes conditions.

Le choix des conditions expérimentales de la première et de la seconde phase est fonction des attentes de l'utilisateur et peuvent être adaptées. En effet, les variations de paramètres tels que l'épaisseur d'un dépôt de matière sur un substrat, comme la sous-couche, la longueur des nanotubes de carbone ou encore le dopage, sont des éléments pour lesquels des données bibliographiques existent dans le domaine dépôt par CVD. Ainsi, il est par exemple possible qu'un allongement de la durée de la première phase conduit à la formation d'une couche plus épaisse de céramique et que celui de la seconde phase à la formation de nanotubes de carbone plus longs.

La première phase est généralement effectuée à une température de 200 à 1000°C, de préférence de 700 à 1000°C pour le précurseur TEOS, de 450 à 700°C pour le tétra-isopropoxyde de titane (ou "TTiP") et une pression de 30 à 150 mbar. A titre d'exemple illustratif, pour une solution de TEOS à 1 mole par litre dans du toluène et à fréquence d'injection de 1 à 10 Hz (optimale entre 2 et 4 Hz), le temps d'ouverture de la vanne étant fixé entre 1 et 3 ms, le temps de dépôt/injection peut être compris typiquement entre 10 secondes et 10 minutes et il est optimal entre 20 secondes et 4 minutes. De manière avantageuse, la première phase sera menée de telle sorte que l'épaisseur de la sous-couche soit de taille nanométrique. Plus particulièrement, l'épaisseur des couches obtenues peut varier de 20 à 500 nm suivant les paramètres et le temps de dépôt, ainsi que suivant le type de précurseurs employés, cette épaisseur pouvant être observée et déterminée par microscopie électronique à balayage (MEB) ou à partir d'une microsonde de Castaing.

Comme on le verra plus loin, la sous-couche apparaît alors *"conforme"* à la surface des fibres, c'est-à-dire que les couches obtenues adoptent la morphologie des surfaces sur lesquelles elles croissent et toutes les aspérités et les accidents de la surface se retrouvent recouverts de façon homogène.

La seconde phase est généralement effectuée à une température de 700 à 1100°C, de préférence entre 800 et 900°C, et une pression de 200 à 1000 mbar. La durée de la seconde phase sera fonction de la taille des nanotubes de carbone qu'il est souhaité obtenir et de la capacité du réacteur de synthèse. Elle pourra varier de quelques minutes à quelques heures. On pourrait citer à titre d'exemple, pour une solution de ferrocène à 2,5% en poids dans le toluène, des paramètres d'injection employés avec une fréquence de 17,7 Hz, un temps d'ouverture de 0,5 ms, une température du four de 850°C et une température de l'évaporateur de 200°C à pression atmosphérique.

La première phase et la seconde phase sont effectuées de manière successive dans le même réacteur et en particulier sans exposition à l'atmosphère extérieure. Il peut être avantageux que la sous-couche soit déposée à basse pression, puis d'augmenter la pression dans le réacteur de croissance sensiblement à la pression atmosphérique avant de réaliser la seconde phase.

Le four est soumis à une montée de température pour atteindre la température nécessaire au dépôt de la sous-couche. La vitesse de montée en température peut être variable car elle n'a aucune incidence sur le matériau formé *in fine,* les réactifs n'étant pas présents dans le réacteur pendant la montée de température. Dès que le four a atteint la température désirée et que la pression dans le réacteur est régulée à la valeur désirée, généralement inférieure à la pression atmosphérique et de l'ordre de 50 mbar le plus souvent, le premier injecteur est actionné.

A l'issue de la première phase, la pression dans le réacteur est élevée sensiblement jusqu'à la pression atmosphérique. Puis, le second injecteur est actionné, en utilisant les paramètres d'injection appropriés pour la croissance de nanotubes de carbone.

Le procédé peut être terminé après des durées très courtes (de l'ordre de quelques minutes) ou peut être poursuivi plus longtemps en fonction de la capacité du réacteur, de la longueur désirée des tubes et en fonction des propriétés visées.

Les nanotubes de carbone obtenus par le procédé se présentent sous la forme d'un tapis dense et les nanotubes sont alignés, leurs axes principaux respectifs étant sensiblement perpendiculaires à la surface du substrat (ou, en particulier, de la sous-couche) recevant le dépôt. La densité des nanotubes de carbone est comparable à celle observée sur substrat de Si ou quartz, c'est-à-dire de l'ordre de 10⁹ à 10¹⁰ nanotubes par cm². Cette densité peut être estimée par analyse de clichés MEB ou par mesure de prise de masse sur les substrats utilisés.

Le rendement de synthèse obtenu est satisfaisant. Il peut être estimé par simple comparaison entre la masse de nanotubes de carbone formés et la masse de réactifs injectée. Un résultat mesuré expérimentalement dans le cadre de la mise en oeuvre de l'invention est compris entre 8 et 40 %.

L'invention concerne également le produit obtenu par la mise en oeuvre du procédé selon l'invention, en particulier une structure multicouche comportant au moins une sous-couche de céramique (par exemple une couche d'un premier oxyde et une autre couche d'un deuxième oxyde) et la couche de nanotubes de carbone déposée sur la sous-couche et formant un tapis dense et resserré, dont l'épaisseur peut varier de quelques micromètres à quelques dizaines de millimètres.

L'invention vise aussi les substrats revêtus d'une telle structure comportant au moins une sous-couche de céramique et une couche de nanotubes de carbone au sens de l'invention. Un premier type de substrat peut être une fibre de renfort (une fibre de carbone, particulièrement). L'invention vise alors aussi les matériaux composites à matrice organique, céramique ou polymère, incorporant de telles fibres de renfort traitées par la mise en oeuvre du procédé selon l'invention.

Un deuxième type de substrat peut être un substrat métallique utilisé par exemple en tant que matériau à stockage d'énergie (dans un super-condensateur, une pile à combustible, ou autre). Par ailleurs, un tel matériau possède des propriétés telles qu'il peut être utilisé en variante ou en complément pour un interfaçage thermique en vue d'une évacuation de chaleur.

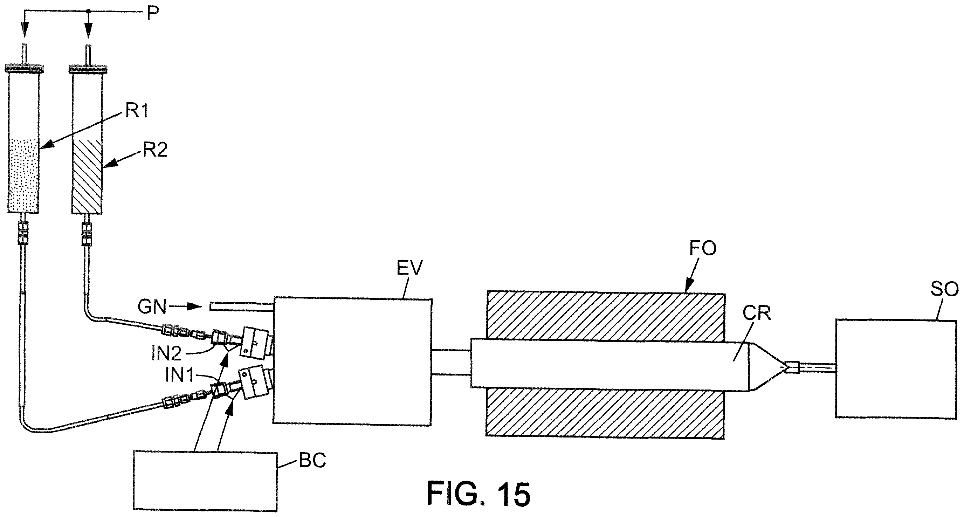

L'invention vise aussi un dispositif pour la mise en oeuvre du procédé et tel que décrit ci-après en référence à la figure 15, dans un exemple de réalisation.

Le procédé présenté permet de produire des nanotubes alignés sous forme de tapis dans un réacteur avec un rendement catalytique important. De plus, il est adapté à la croissance sur tous types de substrats résistant à la température de pyrolyse. Le procédé décrit permet la croissance de nanotubes de carbone denses et alignés sur pratiquement tout type de substrat, plan ou poreux/fibreux, à des densités comparables à celles obtenues sur substrats de type céramiques oxydes. On peut donc ainsi simplement obtenir des tapis de nanotubes de carbone alignés sur tout substrat pouvant résister aux conditions d'élaboration. Ainsi, l'incorporation de nanotubes de carbone à des matériaux composites à renfort de fibre de carbone peut être réalisée simplement, avec les nanotubes avantageusement denses, alignés et attachés aux fibres, permettant d'envisager une amélioration des propriétés mécaniques, électriques et thermiques desdits composites.

L'invention permet notamment la minimisation des étapes de manipulation durant le procédé de préparation des nanotubes de carbone. En effet, ce procédé se distingue notamment des procédés évoqués dans la littérature, outre par ses résultats bien meilleurs en termes de densité, de longueur, de propreté et d'alignement des nanotubes de carbone, par le fait qu'aucune manipulation supplémentaire n'est nécessaire par rapport à une croissance de nanotubes de carbone classique telle que décrite par le brevet FR-2 841 233. La taille des nanotubes de carbone obtenus peut être facilement contrôlée, et une production à une échelle importante, compte tenu de la facilité de mise en oeuvre, est possible.

Par ailleurs, eu égard au rendement de production atteint, l'invention permet également la réduction des volumes de nanotubes de carbone à l'état pulvérulent en contact notamment avec la peau et les voies respiratoires d'un utilisateur. Dans ces conditions, la manipulation des substrats revêtus, comme des matériaux composites, à l'issue du procédé, est plus sure pour l'utilisateur car les risques associés à la présence de nanotubes de carbone pulvérulents sont fortement diminués.

Ainsi, l'invention présente un avantage par rapport à d'autres techniques de croissance de nanotubes de carbone, notamment celle décrite dans le document WO 2007/136613, selon laquelle les nanotubes de carbone sont déposés sur des catalyseurs qui revêtent la surface d'un substrat carboné, ces catalyseurs étant appliqués en immergeant le substrat carboné dans une solution de catalyse, ou par électro-dépôt. Ainsi, dans ce document, l'élaboration d'une telle sous-couche de catalyseurs oblige alors de prévoir plusieurs étapes dans le procédé :
- une étape de dépôt d'une couche de catalyseurs, selon une première technique (par exemple par électro-dépôt comme stipulé dans le document) ; et
- une deuxième étape de dépôt par une autre technique (par exemple CVD) pour la croissance des nanotubes de carbone, eux-mêmes.

On peut alors constater l'avantage qu'apporte l'invention qui prévoit de déposer successivement la sous-couche de céramique et les nanotubes de carbone, en une seule manipulation dans un même réacteur de croissance.

### BRÈVE DESCRIPTION DES DESSINS

D'autres caractéristiques et avantages de l'invention apparaîtront à l'examen de la description détaillée ci-après, et des dessins annexés sur lesquels :
- la figure 1 représente un cliché (imagerie MEB) d'une sous-couche de silice déposée après la première phase du procédé au sens de l'invention (230 secondes après la formation de la sous-couche) ;
- la figure 2 représente un cliché (MEB) de fibres de carbone non tissées revêtues de nanotubes de carbone formés sur les fibres sous forme de nappes, laissant apparaître à leur base la fibre de carbone ;
- la figure 3 correspond à une micrographie de fibres de carbone tissées revêtues de nanotubes de carbone formant des tapis étroits le long des fibres, qui par endroits s'écartent, montrant la densité des nanotubes de carbone les constituant ;
- la figure 4 représente le cliché (MEB) d'une coupe d'un toron de fibres de carbone de la figure 3, les fibres étant revêtues de nanotubes de carbone (NTC) formant des tapis étroits et parallèles suivant les fibres de surface, des nanotubes plus courts recouvrant les fibres sous jacentes et constituant une partie inférieure ;
- la figure 5 représente une micrographie d'une fibre de carbone partiellement décapée après la deuxième phase du procédé, des nanotubes de carbone (NTC) étant visibles sur la surface d'une sous-couche de silice (SiO₂), elle-même déposée de façon uniforme sur la surface de la fibre de carbone (C) ;
- la figure 6 représente une micrographie d'un fil de palladium (Pd) qui a été soumis à l'application du procédé de l'invention, avec en figure 6(a) la densité des nanotubes de carbone formés NTC, et en figure 6(b) le détail de la sous-couche SiO₂ arrachée du substrat Pd et portant les nanotubes de carbone (NTC) ;
- la figure 7 représente une micrographie d'une fibre de carbone soumise à la première phase du procédé uniquement durant 60 secondes et recouverte d'une couche de silice de 250 nanomètres d'épaisseur ;
- la figure 8 représente une micrographie des fibres de la figure 7 après la seconde phase du procédé, avec en particulier un tapis de nanotubes de carbone denses et alignés ;
- la figure 9 représente la micrographie d'une fibre de carbone soumise à la première phase du procédé uniquement durant 23 secondes et recouverte d'une couche de silice de quelques dizaines de nanomètres d'épaisseur ;
- la figure 10 correspond à une micrographie des fibres de la figure 9 recouverts de nanotubes de carbone ;
- la figure 11 montre une micrographie réalisée sur un substrat d'acier inox recouvert d'alumine ;
- la figure 12 correspond à une micrographie du substrat de la figure 11 après croissance de nanotubes de carbone ;
- la figure 13 correspond à une micrographie de fibres de carbone recouvertes d'oxyde de zirconium après croissance de nanotubes de carbone ;
- la figure 14 montre une micrographie d'un substrat de silicium recouvert d'une couche de SiCₓN_{y}O_{z} déposée par injection en phase vapeur (CVD d'injection), avant croissance de nanotubes de carbone par la même technique (CVD d'injection) ;
- la figure 15 illustre schématiquement un dispositif permettant la mise en oeuvre de l'invention ; et
- la figure 16 illustre à titre de comparaison des nanotubes obtenus par la technique de l'art antérieur consistant à déposer préalablement aux nanotubes un métal en tant que catalyseur, décrite dans le document Sonoyama et al., Carbon vol. 44, p. 1754 (2006).

### EXPOSÉ DÉTAILLÉ DE MODES DE RÉALISATION PARTICULIERS

En référence à la figure 15, le procédé est typiquement réalisé dans un dispositif comprenant cinq modules distincts : au moins un réservoir R1, au moins un injecteur IN1, un évaporateur EV, une chambre de réaction CR (ou « réacteur ») et un système d'évacuation SO. Ce dispositif est adapté pour le dépôt en phase vapeur CVD et en particulier pour la croissance de nanotubes de carbone. Généralement, un hydrocarbure est employé à la première phase du procédé, à titre de solvant du liquide A, dans le circuit du réservoir R1. Cet hydrocarbure sert de support à la vaporisation. Seul le précurseur de céramique, dans le liquide A, prend part à la croissance de la sous-couche, comme un composé organométallique. On utilise, dans l'exemple représenté, un deuxième réservoir R2 et un deuxième injecteur IN2 pour le liquide B employé à la deuxième phase du procédé, dans le circuit du réservoir R2. Le liquide B peut comporter un hydrocarbure dans lequel un précurseur de métal est dissout (tel un composé organométallique) en tant que catalyseur favorisant la croissance des nanotubes. Il constitue ainsi la source carbonée et l'apport en catalyseur.

L'évaporateur et le réacteur sont mis sous vide puis purgé à l'aide d'un gaz vecteur GN. Dans le cas où des précurseurs de céramique non oxyde ont été employés, l'ensemble du dispositif est préalablement mis sous vide et chauffé pour limiter au mieux toute trace d'oxygène et/ou d'eau.

Ainsi, les deux réservoirs distincts R1 et R2 correspondant à deux enceintes contenant les liquides employés l'un pour le dépôt de la sous-couche (liquide A) et l'autre pour la croissance des nanotubes de carbone (liquide B). Ces enceintes sont généralement en acier inoxydable ou en quartz et reliées aux entrées des deux injecteurs, respectivement, par un conduit en matériau résistant tel que le polytétrafluoréthylène. L'ensemble est prévu pour être soumis à une pression P permettant d'acheminer le liquide jusqu'à l'injecteur. La pression est générée par l'introduction dans la partie supérieure de l'enceinte, c'est-à-dire au-dessus du niveau de liquide, d'un gaz sous pression, typiquement de 1 à 5 fois la pression atmosphérique. Ces enceintes peuvent être laissées à température ambiante, ou à température supérieure.

La partie d'injection comprend deux injecteurs IN1 et IN2, reliés chacun à un réservoir et du type utilisé pour l'injection de moteur thermique dans le secteur automobile. Un boîtier de commande BC de l'injection est contrôlé par un système à microprocesseur. Une bague de connexion de chaque injecteur à l'évaporateur EV comprend un circuit d'eau ou un ventilateur de refroidissement et des arrivées de gaz vecteur GN. A titre d'exemple, le système d'injection « Jetpulse ®» de la société Qualiflow® ou le système « Vapbox® » de la société Kemstream® peuvent être utilisés.

En particulier, un tel système d'injection peut être employé en mode pulsé et permet d'injecter à chaque actionnement un ensemble de gouttelettes de volume donné. Chaque injecteur comporte un clapet, du type vanne à aiguille, piloté en durée et en fréquence d'ouverture. La durée d'ouverture permet de contrôler le volume des gouttelettes et la durée totale d'injection est fixée par la fréquence d'injection et le nombre d'impulsions.

Le liquide contenu dans chaque réservoir est avantageusement isolé de l'évaporateur par le clapet de l'injecteur associé, ce qui évite des réactions parasites ou des évaporations préférentielles du liquide liées à l'échauffement de la solution. L'isolement enceinte/réacteur permet en outre de réaliser les dépôts à pression réduite dans le réacteur.

Le volume des gouttelettes injectées est contrôlé à la fois par la différence de pression entre l'enceinte contenant le liquide et l'évaporateur ou le réacteur et par la durée d'ouverture du clapet de l'injecteur. La quantité de liquide injectée par unité de temps (donc le débit de liquide) est contrôlée par la fréquence d'ouverture du clapet de l'injecteur. Elle est maîtrisée au cours du temps et peut varier dans une large gamme. L'utilisateur peut ainsi contrôler la quantité de précurseur ainsi que le mode d'introduction. Une telle réalisation confère une grande maîtrise de la morphologie et de l'épaisseur des couches céramiques déposées, ainsi que des conditions de dépôt des nanotubes de carbone.

Le dispositif de la figure 15 permet l'utilisation de liquides, et donc de précurseurs, dans une large gamme de tension de vapeur. La concentration en précurseur solide peut ainsi varier dans une large gamme. En particulier, il est possible d'utiliser des solutions très concentrées.

Ce système d'injection est en outre adapté à l'utilisation de divers hydrocarbures liquides tels que le cyclohexane et les alcanes (hexane, heptane, octane, etc.). Il permet en outre de travailler à pression réduite dans le réacteur pour les dépôts de couches minces oxydes ou non oxydes.

L'évaporateur EV est composé d'une enceinte métallique chauffée et placée en amont du réacteur CR. Le principe consiste à évaporer les gouttelettes émises par le système d'injection. Le réacteur CR est disposé dans un four tubulaire FO, ou à section carrée, piloté par un programmateur de température pour réaliser des dépôts à une température pouvant aller jusqu'à 1200°C.

En aval de la chambre de réaction CR, on prévoit une partie d'évacuation des gaz SO composée d'un système de refroidissement des gaz suivi d'un piège refroidi à la température de la glace et d'un bulleur dans l'acétone. Alternativement, les pièges peuvent être remplacés par un système de filtre, ou des piège(s) à azote liquide.

### RESULTATS EXPERIMENTAUX

L'ensemble des résultats expérimentaux exposés ci-après, tout comme l'exposé détaillé qui précède, n'a pas d'autre but que d'illustrer l'invention et ne doit pas être compris comme une limitation de sa portée.

Afin de pouvoir procéder à l'observation et à la mesure des sous-couches déposées, toutes les manipulations ont été réalisées selon l'approche consistant à réaliser soit des dépôts de sous-couches seules, soit à combiner les deux phases successives : croissance de la sous-couche suivie de la croissance des nanotubes de carbone. De plus, dans tous les exemples, les conditions de croissance de nanotubes sur les substrats prétraités dans la seconde phase sont identiques. Elle est décrite en détail dans un premier exemple ci-après, mais cette description n'est pas répétée dans les exemples suivants.

Parmi les substrats utilisés pour ces dépôts, un témoin de silicium a toujours été inclus pour faciliter les caractérisations des sous-couches en termes de morphologie et d'épaisseur. Les autres substrats employés sont des substrats sur lesquels la croissance de nanotubes de carbone est difficile. Il s'agit de l'acier inoxydable, des fibres de carbone et du graphite (ou papyex®, correspondant à un papier composé de flocons de graphite laminés), et de métaux tels que le palladium ou le molybdène. Les phases du procédé ont été réalisées dans le même dispositif à la suite l'une de l'autre.

### Exemple 1 : nanotubes alignés obtenus sur une sous-couche de silice à partir de solutions de Tétraéthylorthosilane (TEOS) dans le toluène et ferrocène dans le toluène, en une seule passe dans le même dispositif de dépôt CVD.

L'hydrocarbure liquide utilisé est le toluène (anhydre) et le précurseur de la sous-couche de silice du Tétraéthylorthosilane TEOS. Pour la croissance de nanotubes après le dépôt de la sous-couche, le précurseur de métal (Fe) jouant le rôle de catalyseur est le ferrocène. La source carbonée étant le toluène. Le TEOS a été dissout dans le toluène anhydre et le ferrocène (solide) dans le toluène. La concentration de ferrocène dans le toluène est de 2,5% en masse (la même dans tous les exemples qui suivent ci-après). Les solutions résultantes ont alors été versées chacune dans une enceinte à liquide et une pression de 1 bar d'argon a été appliquée afin de pousser le liquide vers l'injecteur.

Pour le dépôt de la sous-couche, plusieurs épaisseurs ont été réalisées à partir d'une solution de TEOS de concentration de 1 mole par litre, en variant les durées d'injection.

### a) Dépôt de la sous-couche pendant 230 secondes, suivi d'une croissance de nanotubes pendant 15 minutes

On a procédé à 690 injections de gouttelettes de solution TEOS/toluène à une fréquence de 3 Hz, avec :
- une durée d'ouverture de la vanne aiguille de 2.10⁻³ seconde,
- une durée totale d'injection de 230 secondes et
- une masse de solution injectée de 1,72 gramme par minute.
Le gaz vecteur est de l'argon à un débit de 2 litres par minute. La température du four est de 850°C.

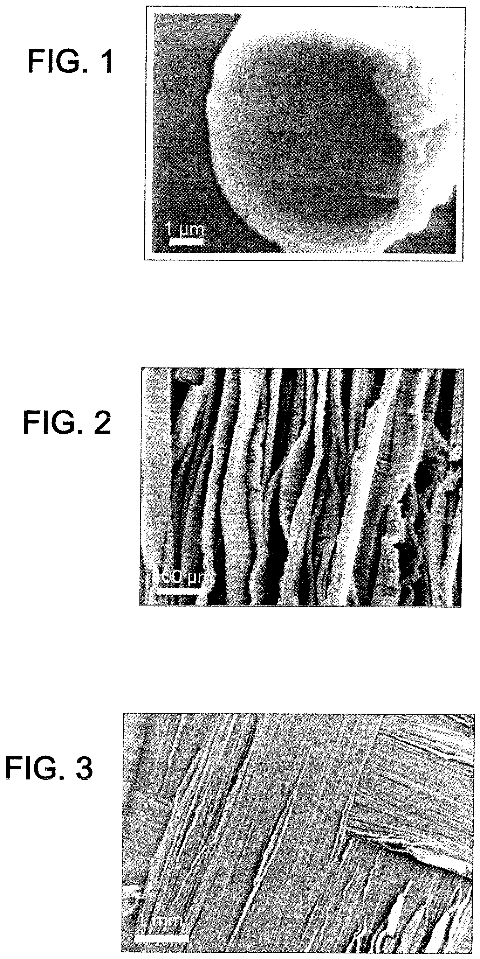

L'observation au microscope électronique à balayage illustrée sur le cliché de la figure 1 montre que les substrats soumis à ce traitement dans le réacteur se trouvent recouverts par une couche de silice de 400 nm d'épaisseur environ (épaisseur corroborée par mesures à la microsonde de Castaing).

Il a ensuite été procédé à 15930 injections de la solution ferrocène/toluène, à une fréquence de 17,7 Hz, avec une durée d'ouverture de la vanne aiguille de 0,5.10⁻³s, et pour une durée totale de réaction de 15 minutes. Les observations en microscopie électronique à balayage montrent en figure 2 la présence de nappes de nanotubes alignés à l'image d'un tapis sur tous les substrats présents dans la chambre de réaction, y compris en particulier sur des fibres de carbone (de type « ex-PAN », pour Polyacrylonitrile pyrolysée) et sur les substrats métalliques de type inox et palladium. L'épaisseur de ces nappes, soit la longueur des nanotubes, est d'environ 300 microns à 850°C. Dans ces conditions de synthèse, il ne subsiste au sein du produit carboné qu'une très faible proportion de sous-produits sous forme d'agglomérats de particules carbonées.

La figure 3 montre l'application de ce procédé à la croissance sur fibres de carbone tissées.

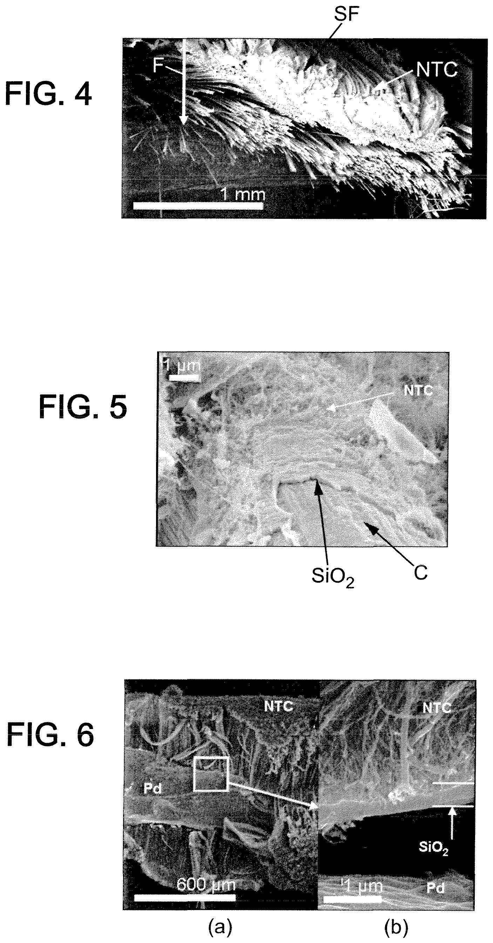

En référence à la figure 4, l'observation d'un faisceau de fibres de carbone SF prélevé au sein d'un tissage soumis au procédé de l'invention montre que l'essentiel des nanotubes (NTC) croît à la surface du faisceau SF (et donc du tissu). La direction et le sens du flux de réactifs initial dans le réacteur de croissance sont donnés par la flèche F. Cependant, il a pu être constaté que la sous-couche de silice est présente sur une importante proportion du faisceau, et que des nanotubes courts ont poussé à l'intérieur du faisceau, mais ne se sont pas développés de façon importante, probablement en raison de la gêne stérique et de la diffusion moindre des réactifs entre les fibres recouvertes de nanotubes.

En référence à la figure 5, présentant le détail de la surface d'une fibre partiellement décapée, on peut voir distinctement la sous-couche de silice SiO₂ conforme à la surface de la fibre de carbone, et surmontée de nanotubes (NTC).

Le même procédé appliqué à un substrat de palladium Pd (de forme générale filaire) montre, encore, une croissance en tapis des nanotubes (NTC). La figure 6 montre la morphologie de la base des nanotubes (NTC) sur la sous-couche SiO₂ qui a été décollée mécaniquement du substrat de palladium.

Les mêmes observations ont été réalisées sur des substrats d'acier inoxydable et de graphite.

### b) Dépôt d'une sous-couche de 60 secondes, suivi d'une croissance de nanotubes de 15 minutes

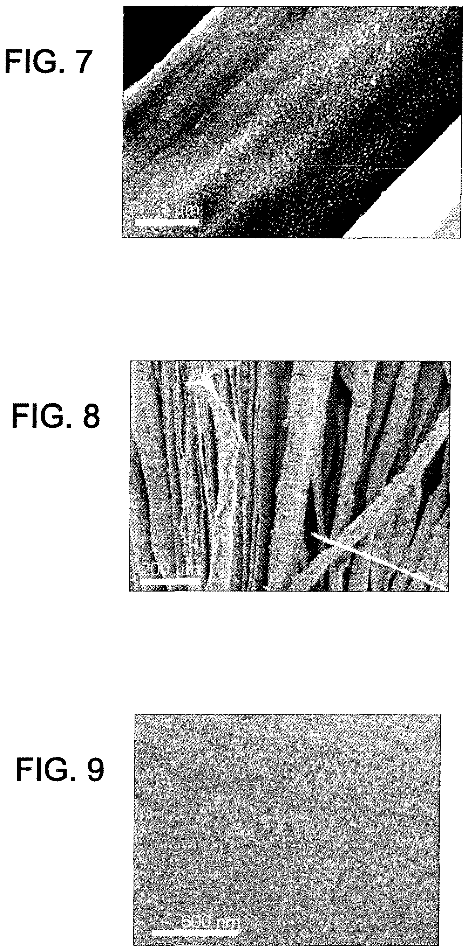

On a procédé dans la première phase à 180 injections dans des conditions strictement identiques à celles décrites précédemment, pour une durée totale de 60 secondes. Comme le montre la figure 7, les substrats (fibres de carbone) soumis uniquement à un dépôt de sous-couche montrent une couche de SiO₂ déposée en surface, de 250 nanomètres d'épaisseur (mesure à la microsonde de Castaing).

Lors de la seconde phase, on peut constater la croissance des nanotubes (NTC) denses et alignés en tapis le long des fibres, d'une longueur estimée à 230 µm, comme l'illustre la figure 8. Les mêmes observations ont été réalisées sur des substrats d'acier inoxydable et de graphite.

### c) Dépôt d'une sous-couche de 23 secondes, suivi d'une croissance de nanotubes de 15 minutes

On a procédé à 69 injections dans des conditions strictement identiques à celles décrites précédemment, pour une durée totale de 23 s. Une très fine couche recouvre les fibres de carbone soumises à ce dépôt comme le montre la figure 9. Les mesures par microsonde de Castaing (mesure de composition à diverses tensions d'accélération et modélisation) sur les dépôts ont mis en évidence une épaisseur de 140 nm environ.

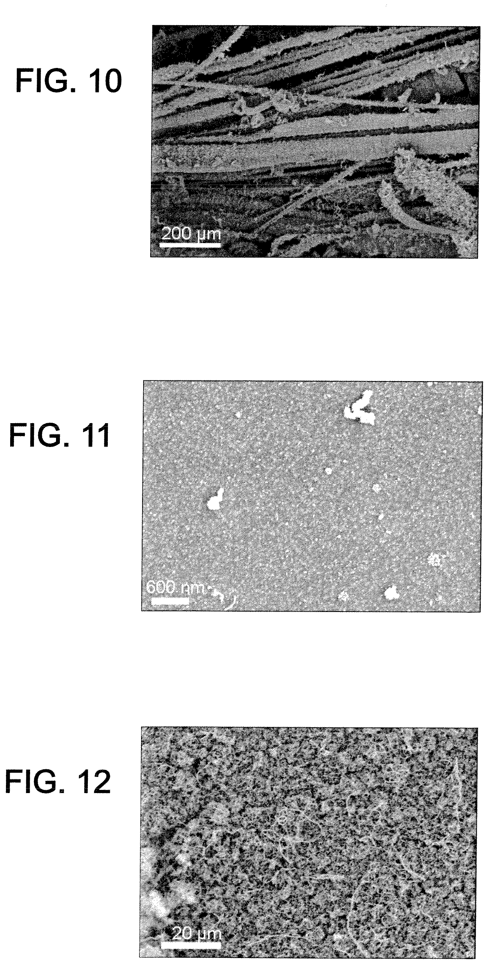

Lors de la seconde phase de dépôt, on peut constater sur la figure 10 la croissance de nanotubes sur les fibres traitées. Généralement, les nanotubes obtenus s'avèrent d'autant plus courts (20 à 30 µm) que les épaisseurs de sous-couche sont plus faibles, ce qui laisse préjuger d'une relation de proportionnalité entre l'épaisseur de la sous-couche et la longueur des tubes jusqu'à un certain seuil d'épaisseur de la sous-couche. Néanmoins, la croissance a lieu de façon dense, à la surface des fibres, l'axe des nanotubes en croissance étant sensiblement perpendiculaire à la surface du substrat recevant le dépôt. La longueur des nanotubes peut atteindre parfois 100 µm sur une minorité de fibres.

Les mêmes observations ont été réalisées sur des substrats d'acier inoxydable et de graphite.

### Exemple 2 : Nanotubes de carbone alignés, déposés sur une sous-couche d'alumine à partir de solutions de tributoxyde d'aluminium dans le toluène et ferrocène dans le toluène, en une seule passe dans le même dispositif.

Pour le dépôt de la couche d'alumine, une solution de tributoxyde d'aluminium dans le toluène, à 1 mole par litre a été utilisée. La solution employée pour la phase de croissance des nanotubes (NTC) est constituée d'hydrocarbure liquide (toluène) jouant le rôle de source de carbone et d'un précurseur du métal (Fe) jouant le rôle de catalyseur (ferrocène). Une pression de 1 bar d'argon a été appliquée afin de pousser le liquide vers les injecteurs.

Le dépôt de la sous-couche a été réalisé en 230 secondes et suivi d'une croissance de nanotubes de 15 minutes. On a procédé à 690 injections de gouttelettes de solution (BuO)₃Al/toluène à une fréquence de 3 Hz. La durée d'ouverture de la vanne aiguille est de 2.10⁻³ s. De l'argon a été employé comme gaz vecteur avec un débit de 2 litres par minute. La température du four est de 850°C.

L'observation au microscope MEB montre que les substrats d'acier inox et de graphite soumis à ce traitement dans le réacteur se trouvent recouverts par une couche d'alumine très fine de 20 nm d'épaisseur environ, comme le montre la figure 11.

Cette première phase a été suivie d'une phase de croissance de nanotubes. La température de pyrolyse est de 850 °C et les paramètres d'injection sont identiques à ceux décrits dans l'exemple 1. La couche de nanotubes (NTC) observée est courte mais présente comme le montre la figure 12. L'épaisseur du tapis obtenu est estimée à quelques dizaines de micromètres.

### Exemple 3 : Nanotubes de carbone alignés, obtenus sur une sous-couche de ZrO₂ à partir de solutions de trétrabutoxyde de zirconium dans le toluène et ferrocène dans le toluène, en une seule passe dans le même dispositif.

Pour le dépôt d'une sous-couche d'oxyde de zirconium (ZrO₂), une solution de trétrabutoxyde de zirconium dans le toluène, à 1 mole par litre a été utilisée. La solution employée pour la phase de croissance des nanotubes était constituée de toluène et de ferrocène. Une pression de 1 bar d'argon a été appliquée afin de pousser le liquide vers les injecteurs.

Le dépôt de sous-couche a été réalisé en 230 secondes. Il a été suivi d'une croissance de nanotubes de 15 minutes. On a procédé à 690 injections de gouttelettes de solution (BuO)₄Zr/toluène à une fréquence de 3 Hz. La durée d'ouverture de la vanne aiguille est de 2.10⁻³ seconde. Le gaz vecteur est de l'argon à un débit de 2 litres par minute. La température du four est de 450°C.

L'observation au microscope MEB montre que les substrats d'acier inox et de graphite soumis à ce traitement dans le réacteur se trouvent recouverts par une couche de ZrO₂ de 35 nm d'épaisseur environ. Des analyses par cartographie EDS (pour « Energy Dispersive Spectrometry » ou « spectrométrie en énergie ») de fibres de carbone recouvertes dans ces conditions montre que du zirconium est bien présent sur les fibres.

Cette première phase a été suivie d'une phase de croissance de nanotubes. La température de pyrolyse est de 850 °C et les paramètres d'injection identiques à ceux décrits dans l'exemple 1. Un dépôt carboné a été obtenu sur les fibres de carbone et les substrats d'inox recouverts de ZrO₂, à la surface desquels il est notoire que la croissance de nanotubes s'avère très difficile sans prétraitement.

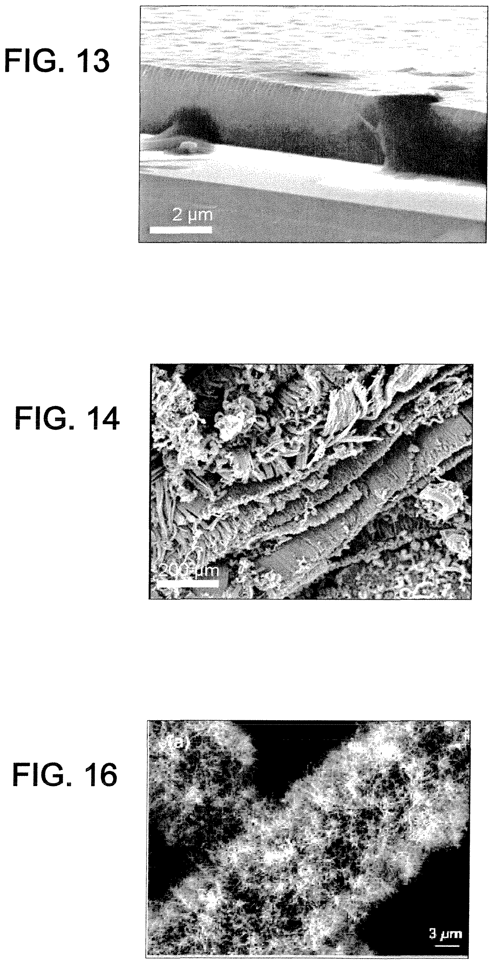

La figure 13 montre la croissance de nanotubes sur les fibres recouvertes au préalable d'une couche de ZrO₂. Comme dans le cas de la sous-couche de SiO₂, on observe les nanotubes se regroupant en nappes, avec une longueur de 200 µm.

Les dépôts sur acier inoxydable et graphite ont mené aux mêmes observations.

### Exemple 4 : Nanotubes de carbone alignés, obtenus sur une sous-couche de type SiC ou SiCN à partir de solutions de hexaméthyldisilazane ou tétrakis(diméthylamino)silane dans le toluène et ferrocène dans le toluène, en une seule passe dans le même dispositif.

Pour le dépôt de couches céramiques non oxydes, des solutions d'héxamethyldisilazane (HMDS) ou tétrakis(diméthylamino)silane (4-DMAS) dans le toluène, à 1 mole par litre ont été utilisées. La solution employée pour la phase de croissance des nanotubes est constituée de toluène et de ferrocène. Une pression de 1 bar d'argon a été appliquée afin de pousser le liquide vers les injecteurs.

Le dépôt de la sous-couche a été fait en 230 secondes et suivi d'une croissance de nanotubes de 15 minutes. On a procédé à 690 injections de gouttelettes de solution HMSD/toluène à une fréquence de 3 Hz. La durée d'ouverture de la vanne aiguille est de 2.10⁻³ s. Le gaz vecteur est de l'argon à un débit de 2 litres par minute. La température du four est de 1000°C.

L'observation au MEB montre que les substrats de silicium et d'acier inox soumis à ce traitement dans le réacteur se trouvent recouverts par une couche de 2,2 µm d'épaisseur environ. Les analyses à la microsonde de Castaing ont indiqué une composition massique des couches de 33% de silicium, 57% de carbone, 6% d'azote et 4% d'oxygène.

Cette première phase a été suivie d'une phase de croissance des nanotubes. La température de pyrolyse est de 850 °C et les paramètres d'injection sont identiques à ceux décrits dans l'exemple 1. Un dépôt carboné a été obtenu sur les substrats d'inox recouverts du dépôt de SiCₓN_{y}.

La figure 14 montre la tranche d'une couche similaire déposée sur silicium avant la croissance de nanotubes. La morphologie est lisse et dense. Des observations au microscope MEB n'ont pas mis en évidence de porosité interne à la couche.

Ainsi, l'invention concerne la croissance de nanotubes de carbone notamment par dépôt chimique en phase vapeur (CVD) sur des matériaux où une telle croissance est habituellement difficile, tels que les substrats carbonés (substrats plans, fibres de carbone, graphite, nanotubes de carbone eux même), ou métalliques. L'invention concerne aussi le domaine des composites à matrice (céramique ou métallique ou organique) et plus spécifiquement à renfort de carbone (composites à renfort de fibres de carbone notamment). L'invention vise en particulier l'application d'une première phase de croissance d'une sous-couche propice à la croissance des nanotubes sur la surface des fibres, avantageusement par des techniques de dépôt CVD avec injection liquide directe. Cette première phase est suivie immédiatement par une deuxième phase de croissance de nanotubes au sein du même réacteur sans remise à l'air, intermédiaire, ni manipulation additionnelle. Le procédé permet d'enchaîner successivement les deux phases dans le même dispositif de croissance, permettant ainsi d'obtenir des fibres de carbone revêtues de nanotubes denses et alignés en une seule étape globale.

### COMPARAISON AVEC LES RESULTATS DE L'ART ANTERIEUR

La figure 16 illustre des nanotubes déposés sur fibres de carbone obtenus par la technique de l'art antérieur décrite dans le document Sonoyama et al., Carbon vol. 44, p.1754 (2006) et consistant à déposer préalablement à la croissance des nanotubes du ferrocène (FeCp₂) en solution dans le xylène pour l'apport en catalyseur métallique, à une température T1 de 800°C pendant 30 secondes, puis faire croître les nanotubes eux-mêmes à une température T2 de 1000°C pendant 10 minutes en injectant du xylène, sans FeCp₂, à 0,024% de volume en H₂S. Les fibres représentées sont recouvertes d'un « duvet » de nanotubes qui n'est pas aussi dense et resserré que celui illustré sur la figure 8, par exemple, où les nanotubes constituent un tapis en brosse. En effet, sur la figure 8 apparaissent essentiellement les fibres de carbone sur lesquelles se devine par effet de sur-brillance (comme un tissu à « poils longs ») le duvet que forment les nanotubes dont les axes respectifs sont bien perpendiculaires à la surface de substrats que forment les fibres. La longueur des nanotubes de carbone (NTC) ainsi obtenus est limitée (de l'ordre de quelques micromètres).

## Revendications

1. Procédé de croissance de nanotubes de carbone sur un substrat choisi parmi des fibres de carbone, un substrat de carbone et un substrat métallique, dans lequel on prévoit, successivement, dans un même réacteur de croissance, en une seule étape résultant de l'enchaînement des deux phases successives suivantes :
- une première phase de dépôt d'une sous-couche de céramique, la céramique étant choisie parmi SiO₂, Al₂O₃, ZrO₂, TiO₂, SiC, SiCN, SiON et SiOCN,
- suivie d'une deuxième phase de dépôt de nanotubes de carbone, sur ladite sous-couche,
la première phase et la deuxième phase étant réalisées sans exposition à l'atmosphère extérieure.

2. Procédé selon la revendication 1, dans lequel le substrat comporte une surface carbonée recevant une partie au moins du dépôt de la sous-couche.

3. Procédé selon l'une des revendications 1 et 2, dans lequel le substrat comporte une surface métallique recevant une partie au moins du dépôt de la sous-couche.

4. Procédé selon l'une des revendications précédentes, dans lequel la croissance de la sous-couche et des nanotubes est réalisée par dépôt chimique en phase vapeur.

5. Procédé selon l'une des revendications précédentes, dans lequel la sous-couche de céramique est déposée par pyrolyse dans le réacteur d'un premier liquide contenant un précurseur de ladite céramique.

6. Procédé selon l'une des revendications précédentes, dans lequel les nanotubes de carbone sont déposés par pyrolyse dans le réacteur d'un deuxième liquide contenant un précurseur carboné.

7. Procédé selon la revendication 6, dans lequel le deuxième liquide comporte en outre un précurseur métallique en tant qu'apport de catalyseur pour la croissance des nanotubes.

8. Procédé selon l'une des revendications 5 à 7, dans lequel ledit premier liquide et/ou ledit second liquide sont introduits par pulvérisation sous forme de gouttelettes dans un évaporateur en amont du réacteur.

9. Procédé selon la revendication 8, dans lequel les gouttelettes sont introduites dans l'évaporateur par pulsations de fréquence choisie.

10. Procédé selon l'une des revendications précédentes, dans lequel la sous-couche est déposée à basse pression et la pression dans le réacteur est élevée sensiblement à la pression atmosphérique pour le dépôt des nanotubes.

11. Procédé selon l'une des revendications précédentes, dans lequel les première et deuxième phases sont menées à des températures comprises entre 200 et 1200°C.

12. Procédé selon l'une des revendications précédentes, dans lequel, au moins en dessous d'une épaisseur seuil de ladite sous-couche, l'épaisseur de la couche de nanotubes est fonction croissante de l'épaisseur de la sous-couche de céramique.

13. Structure multicouche comportant une couche de nanotubes de carbone obtenus par la mise en oeuvre du procédé selon l'une des revendications précédentes, les nanotubes de carbone étant déposés sur au moins une sous-couche de céramique, les nanotubes de carbone étant ressérrés sous la forme d'un tapis dense, les axes principaux respectifs des nanotubes de carbone étant sensiblement perpendiculaires à la surface du substrat, les nanotubes de carbone ayant une densité comprise entre 10⁹ et 10¹⁰ nanotubes par centimètre carré.

14. Fibre de renfort revêtue d'une structure multicouche selon la revendication 13.

15. Matériau composite à matrice organique, incorporant au moins une fibre de renfort selon la revendication 14.

16. Substrat métallique revêtu d'une structure multicouche selon la revendication 13.

17. Matériau à stockage d'énergie comportant un substrat selon la revendication 16.

## Patentansprüche

1. Verfahren zur Züchtung von Kohlenstoff-Nanoröhren auf einem Substrat, ausgewählt aus Kohlenstofffasern, einem Kohlenstoffsubstrat und einem Metallsubstrat, wobei man nacheinander in demselben Züchtungsreaktor in einem einzigen Schritt, der sich durch die Aneinanderreihung der folgenden beiden aufeinanderfolgenden Phasen ergibt, Folgendes vorsieht:
- eine erste Phase der Abscheidung einer Keramik-Grundschicht, wobei die Keramik aus SiO₂, Al₂O₃, ZrO₂, TiO₂, SiC, SiCN, SiON und SiOCN ausgewählt ist,
- gefolgt von einer zweiten Phase der Abscheidung von Kohlenstoff-Nanoröhren auf der Grundschicht,
wobei die erste Phase und die zweite Phase ohne Aussetzen gegenüber der Außenatmosphäre durchgeführt werden.

2. Verfahren nach Anspruch 1, wobei das Substrat eine kohlenstoffhaltige Oberfläche umfasst, die mindestens einen Teil der abgeschiedenen Grundschicht erhält.

3. Verfahren nach einem der Ansprüche 1 und 2, wobei das Substrat eine Metalloberfläche umfasst, die mindestens einen Teil der abgeschiedenen Grundschicht erhält.

4. Verfahren nach einem der vorhergehenden Ansprüche, wobei die Züchtung der Grundschicht und der Nanoröhren durch chemische Dampfphasenabscheidung durchgeführt wird.

5. Verfahren nach einem der vorhergehenden Ansprüche, wobei die Keramik-Grundschicht durch Pyrolyse einer ersten, eine Vorstufe der Keramik enthaltenden Flüssigkeit in dem Reaktor abgeschieden wird.

6. Verfahren nach einem der vorhergehenden Ansprüche, wobei die Kohlenstoff-Nanoröhren durch Pyrolyse einer zweiten, eine kohlenstoffhaltige Vorstufe enthaltenden Flüssigkeit in dem Reaktor abgeschieden werden.

7. Verfahren nach Anspruch 6, wobei die zweite Flüssigkeit außerdem eine Metallvorstufe als Katalysatorbeschickung zum Züchten der Nanoröhren enthält.

8. Verfahren nach einem der Ansprüche 5 bis 7, wobei die erste Flüssigkeit und/oder die zweite Flüssigkeit durch Zerstäubung in Form von Tröpfchen in einen Verdampfer stromaufwärts des Reaktors eingebracht wird/werden.

9. Verfahren nach Anspruch 8, wobei die Tröpfchen in den Verdampfer durch Impulse einer gewählten Frequenz eingebracht werden.

10. Verfahren nach einem der vorhergehenden Ansprüche, wobei die Grundschicht bei niedrigem Druck abgeschieden wird und der Druck im Reaktor für die Abscheidung der Nanoröhren erheblich höher ist als Atmosphärendruck.

11. Verfahren nach einem der vorhergehenden Ansprüche, wobei die erste und die zweite Phase bei Temperaturen zwischen 200 und 1200°C durchgeführt werden.

12. Verfahren nach einem der vorhergehenden Ansprüche, wobei zumindest unterhalb einer Schwellendicke der Grundschicht die Dicke der Nanoröhrenschicht eine ansteigende Funktion der Dicke der Keramik-Grundschicht ist.

13. Mehrschichtige Struktur, die eine Schicht aus mittels Durchführung des Verfahrens nach einem der vorhergehenden Ansprüche erhaltenen Kohlenstoff-Nanoröhren enthält, wobei die Kohlenstoff-Nanoröhren auf mindestens eine Keramik-Grundschicht abgeschieden sind, wobei die Kohlenstoff-Nanoröhren in Form eines dichten Teppichs zusammengedrängt sind, wobei die jeweiligen Hauptachsen der Kohlenstoff-Nanoröhren im Wesentlichen senkrecht zur Substratoberfläche sind, wobei die Kohlenstoff-Nanoröhren eine Dichte zwischen 10⁹ und 10¹⁰ Nanoröhren pro Quadratzentimeter aufweisen.

14. Verstärkungsfaser, die mit einer mehrschichtigen Struktur nach Anspruch 13 beschichtet ist.

15. Verbundwerkstoff mit organischer Matrix, der mindestens eine Verstärkungsfaser nach Anspruch 14 enthält.

16. Metallsubstrat, das mit einer mehrschichtigen Struktur nach Anspruch 13 beschichtet ist.

17. Energiespeichermaterial, das ein Substrat nach Anspruch 16 enthält.

## Claims

1. A process for growing carbon nanotubes on a substrate chosen among carbon fibers, a carbon substrate and a metal substrate, wherein there is provided, in a single step resulting from sequentially performing the two successive phases below:
- a first phase of depositing a ceramic sub-layer, the ceramic being chosen among SiO₂, Al₂O₃, ZrO₂, TiO₂, SiC, SiCN, SiON and SiOCN
- followed by a second phase of depositing carbon nanotubes on said sub-layer,
the first phase and the second phase being performed without exposure to the outside atmosphere.

2. The process according to claim 1, wherein the substrate comprises a carbon-containing surface receiving at least a part of the deposited sub-layer.

3. The process according to one of claims 1 and 2, wherein the substrate comprises a metal surface receiving at least a part of the deposited sub-layer.

4. The process according to one of the previous claims, wherein the growth of the sub-layer and the nanotubes is realized by chemical vapor deposition.

5. The process according to one of the previous claims, wherein the ceramic sub-layer is deposited by pyrolysis, in the reactor, of a first liquid containing a precursor of said ceramic.

6. The process according to one of the previous claims, wherein the carbon nanotubes are deposited by pyrolysis, in the reactor, of a second liquid containing a carbon precursor.

7. The process according to claim 6, wherein the second liquid additionally comprises a metal precursor providing the catalyst for growing the nanotubes.

8. The process according to one of claims 5 to 7, wherein said first liquid and/or said second liquid is introduced by spraying in droplet form in an evaporator upstream from the reactor.

9. The process according to claim 8, wherein the droplets are introduced into the evaporator by pulses of a chosen frequency.

10. The process according to one of the previous claims, wherein the sub-layer is deposited at low pressure and the pressure in the reactor is substantially higher than atmospheric pressure for the nanotube deposition.

11. The process according to one of the previous claims, wherein the first and second phases are conducted at temperatures between 200 and 1200°C.

12. The process according to one of the previous claims, wherein, at least below a threshold thickness of said sub-layer, the thickness of the nanotube layer is an increasing function of the thickness of the ceramic sub-layer.

13. A multilayer structure comprising a layer of carbon nanotubes obtained by implementing the process according to one of the previous claims, the carbon nanotubes being deposited on at least one ceramic sub-layer, the carbon nanotubes being close to each other in the form of a dense carpet, the respective main axes of the carbon nanotubes being substantially perpendicular to the substrate surface, the carbon nanotubes having a density between 10⁹ and 10¹⁰ nanotubes per cm².

14. A reinforcement fiber covered with a multilayer structure according to claim 13.

15. An organic matrix composite material, incorporating at least one reinforcement fiber according to claim 14.

16. A metal substrate covered with a multilayer structure according to claim 13.

17. A material for storing energy, comprising a substrate according to claim 16.
